Europäisches Patentamt

European Patent Office

Office européen des brevets

(19)

(11) Numéro de publication: **0 023 896**
**A1**

(12) **DEMANDE DE BREVET EUROPEEN**

(21) Numéro de dépôt: **80870036.3**

(22) Date de dépôt: **04.07.80**

(51) Int. Cl.³: **E 04 B 1/346**

(30) Priorité: **16.07.79 BE 196323**

(43) Date de publication de la demande: **11.02.81**
**Bulletin 81/6**

(84) Etats contractants désignés: **AT CH DE FR GB IT LI LU NL SE**

(71) Demandeur: **Massau, Julien, Genistroit 132, B-1348 Louvain-la-Neuve (BE)**

(72) Inventeur: **Massau, Julien, Genistroit 132, B-1348 Louvain-la-Neuve (BE)**

(74) Mandataire: **Vanderperre, Robert et al, Bureau VANDER HAEGHEN 63 Avenue de la Toison d'Or, B-1060 Bruxelles (BE)**

(54) Structure portante pour ensemble orientable et procédé et dispositif pour la réalisation de cette structure.

(57) Une structure portante réalisée de manière à assurer un chemin de roulement uniforme et impeccable pour un ensemble orientable par rotation autour d'un axe vertical. Cette structure est réalisée à partir d'au moins une lame (11) disposée de chant et enroulée en anneaux concentriques suivant le parcours du chemin de roulement, les abouts (A, B) de la lame étant répartis le long du périmètre du chemin de roulement de telle manière qu'un rayon quelconque du cercle formé par la lame ne rencontre jamais qu'un seul about. Dans un mode d'exécution particulier, chaque anneau comprend plusieurs lames (11, 21, . . .) s'étendant sur au moins un segment du périmètre dudit anneau, les abouts des lames (A, B) étant répartis angulairement le long du périmètre du rail de roulement de telle manière qu'un rayon quelconque du cercle formé par ledit rail ne rencontre jamais qu'un seul desdits abouts.

Structure portante pour ensemble orientable
------------------------------------------------------

La présente invention concerne une structure portante
pour porter un ensemble orientable par rotation d'un
axe autour d'un axe vertical.

Un exemple d'ensemble orientable est l'habitation
orientable. Un ensemble de ce genre repose par des
galets sur un chemin de roulement circulaire. Celui-
ci doit être parfaitement de niveau en tous ses
points. Or, comme le sol dans l'emprise d'un ensemble
à ériger n'est normalement jamais parfaitement plat,
il est nécessaire de réaliser le chemin de roulement
de manière à pouvoir en ajuster le nivellement de
façon précise. Si l'on veut éviter la réalisation de
fondations onéreuses par l'importance de la main
d'oeuvre que cela implique, le seul procédé pratique
est celui qui consiste à installer sur le sol un rail
circulaire. Le problème qui se pose alors est celui de
réaliser avec le rail un cercle parfait rigoureusement
de niveau.

Une façon connue de réaliser le rail circulaire consiste
à fixer bout à bout des profilés métalliques préalablement cintrés. Le cintrage de profilés métalliques
est cependant une opération difficile et onéreuse.
En effet, il n'est pratiquement pas possible de réaliser
un cercle parfait à l'aide de segments cintrés car les
abouts des segments ne sont pas cintrés et il subsiste
toujours un léger angle d'ouverture entre les abouts
de deux segments adjacents. De plus, après cintrage,
un profilé présente des déformations inhérentes à
l'opération de cintrage elle-même: compression de la
partie du profilé cintré située à l'intérieur de la
circonférence passant par la fibre neutre et étirement de la partie située à l'extérieur de cette circonférence. Cela a pour conséquence de déporter les galets qui roulent sur un cintre ainsi formé, dans la direction de la tangente au cintre. C'est pourquoi il est usuel d'arrondir la surface de roulement des galets et de graisser le chemin de roulement pour faciliter la remise en circonférence de la ligne de foulée des galets par glissement et réduire dans toute la mesure possible le bruit assoudissant que répercute ce glissement. La pratique d'arrondir ainsi la surface de roulement des galets est d'autre part nuisible pour l'appui qui devient pratiquement ponctuel, de telle sorte que lorsque l'ensemble orientable reste stationnaire pendant un certain laps de temps, il se produit une déformation du rail par écrasement sous le poids important de l'ensemble orientable (un galet supportant couramment plusieurs tonnes concentrées pratiquement en un point), et il se forme dans le chemin de roulement une cuvette difficile à franchir par les galets.

L'invention vise à résoudre le problème de la réalisation pratique d'un chemin de roulement convenable pour un ensemble orientable, qui ne présente pas les inconvénients de la technique connue.

Ce problème est résolu suivant l'invention qui a pour objet une structure portante d'ensemble orientable qui est facile à réaliser avec toute la précision voulue. Cette structure portante comprend au moins un rail de roulement constitué de plusieurs anneaux pratiquement concentriques comprenant chacun au moins une lame courbe disposée de chant et enroulée suivant le périmètre de l'anneau. Les abouts de la lame sont répartis le long du périmètre du rail de telle manière qu'il n'y ait jamais qu'un seul about sur un rayon quelconque du cercle.

Dans une forme de réalisation avantageuse de la structure portante suivant l'invention, chaque rail de roulement se trouve fixé sous l'ensemble orientable et repose sur des galets fixés au sol, le rail de roulement glissant sur les galets lorsque l'ensemble orientable se trouve entraîné en rotation.

L'invention a également pour objet un procédé simple et pratique pour réaliser la structure portante selon l'invention.

Un objet additionnel de l'invention est un outil pratique et efficace pour la mise en oeuvre du procédé selon l'invention.

L'invention a encore pour objet un dispositif avantageux pour entraîner en rotation la structure portante selon l'invention.

L'invention est exposée en détail dans ce qui suit avec référence aux dessins joints sur lesquels:
- les figures 1 à 3 illustrent schématiquement,vus en plan, trois exemples de mode de réalisation d'un rail de roulement selon l'invention;
- les figures 4 à 8 illustrent quelques exemples typiques de sections transversales pour un rail de roulement selon l'invention;.
- les figures 9 et 10 montrent deux modes de réalisation d'une structure de roulement selon l'invention;
- les figures 11 à 13 montrent une forme de réalisation avantageuse du montage de la structure de roulement selon l'invention;
- la figure 14 illustre schématiquement un mode de réalisation d'un dispositif d'entraînement en rotation de la structure portante selon l'invention;
- les figures 15 et 16 sont des vues, respectivement en coupe verticale et en plan, de l'accouplement d'un galet d'entraînement avec le dispositif moteur;

- les figures 17 à 19 illustrent une variante de mode de réalisation du dispositif d'entraînement selon l'invention;

- la figure 20 est une vue en plan d'un gabarit selon l'invention pour faciliter la mise en oeuvre du procédé de réalisation des rails de roulement selon l'invention;

- les figures 21 à 23 sont des vues de détail de la partie encerclée sur la figure 20;

- la figure 24 est une vue à plus grande échelle du montage d'un segment du gabarit de la figure 20;

- la figure 25 est une vue en coupe suivant l'axe de la couronne centrale du dispositif de la figure 20, montrant un bras en position relevée.

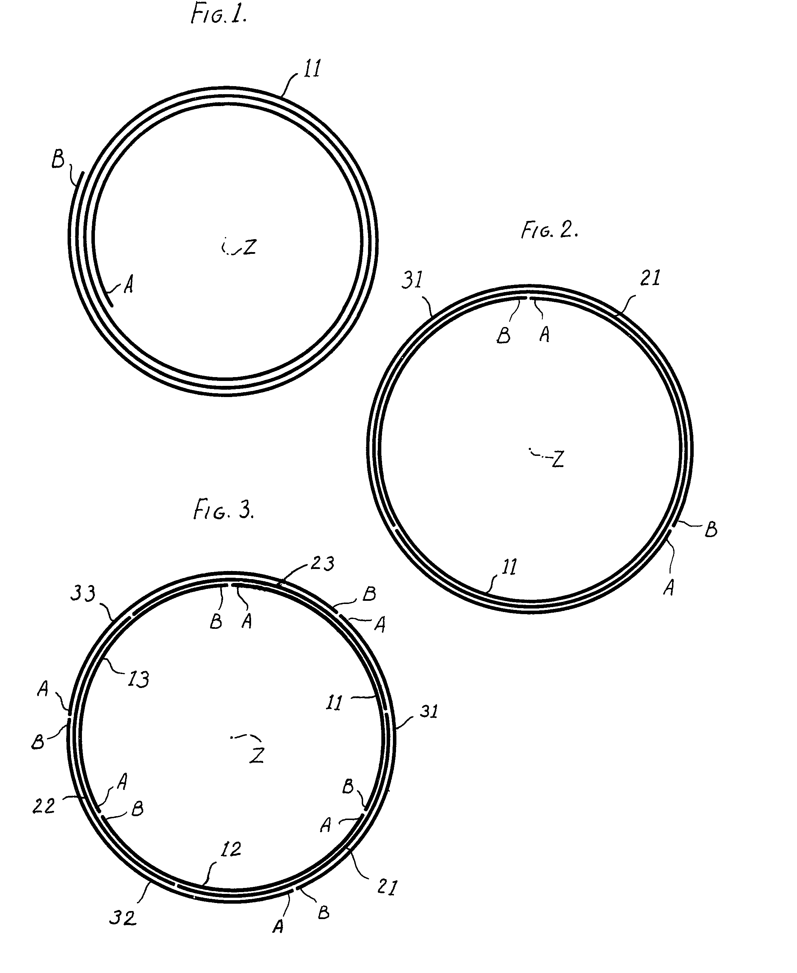

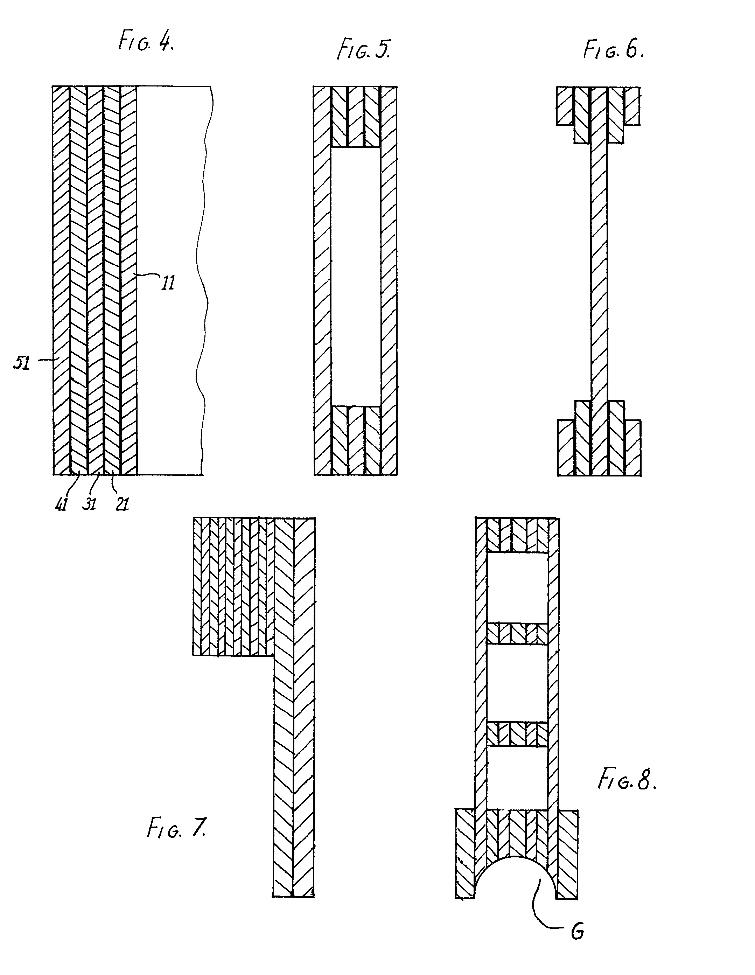

La réalisation d'une structure de roulement selon l'invention est illustrée par les figures 1 à 11. Pour réaliser un rail de roulement parfaitement circulaire, l'invention propose d'utiliser non pas des profilés métalliques cintrés, mais des lames concentriques disposées de chant. Les figures 1, 2 et 3 illustrent schématiquement, vus en plan, trois exemples d'exécution. Dans le mode d'exécution de la figure 1, une seule lame 11 se trouve enroulée circulairement. On remarquera que l'about fin de lame B occupe une position angulaire qui dépasse celle de l'about début de lame A dans le sens de l'enroulement; les positions angulaires des abouts A et B délimitent ainsi un segment circulaire tel qu'il soit toujours supporté par un point d'appui de la structure. Les spires consécutives sont fixées les unes aux autres par des moyens connus quelconques (soudage,rivetage,etc). Dans le mode d'exécution de la figure 2,plusieurs lames 11, 21, 31 s'étendent circulairement de façon concentrique. Les abouts jointifs des lames consécutives sont fixés entre eux par une attache quelconque (non représentée) et les anneaux sont également fixés l'un à l'autre par des moyens connus quelconques. Dans le mode d'exécution de la figure 3, trois lames s'étendent bout à bout sur un trajet circulaire pour former un anneau circulaire: l'anneau intérieur est formé par les lames 11, 12, 13; l'anneau médian est formé par les lames 21, 22, 23 et l'anneau extérieur est formé par les lames 31, 32, 33. Les abouts jointifs des lames contiguës d'un même anneau sont fixés entre eux par des attaches quelconques et les anneaux concentriques sont fixés entre eux par des moyens connus quelconques. L'appareillage des lames est réalisé de telle sorte que les abouts des lames contiguës dans chaque anneau soient répartis angulairement de manière qu'un rayon quelconque ne rencontre jamais qu'une seule paire d'abouts jointifs. Bien que trois anneaux ou spires soient représentés sur les figures 1 à 3, il est bien entendu qu'un nombre quelconque d'anneaux concentriques ou de spires peut être prévu. En pratique on prévoiera par exemple, comme illustré à la figure 4, cinq anneaux de 10 mm d'épaisseur pour réaliser une largeur de chemin de roulement de 5cm très convenable. Le nombre d'anneaux dépendra du diamètre de la structure portante et du poids de l'ensemble orientable à supporter.

La mise en place et la mise en forme des lames peut être aisément réalisée par déroulement de bandes d'acier ou d'une autre matière ayant la résistance voulue à la compression sur un gabarit approprié comme il sera décrit plus loin. La mise en place du ou des rails de roulement étant réalisée sur des points d'appui convenablement ajustés en niveau, la structure de roulement suivant l'invention assure un chemin de roulement parfaitement circulaire et impeccablement de niveau en tous ses points.

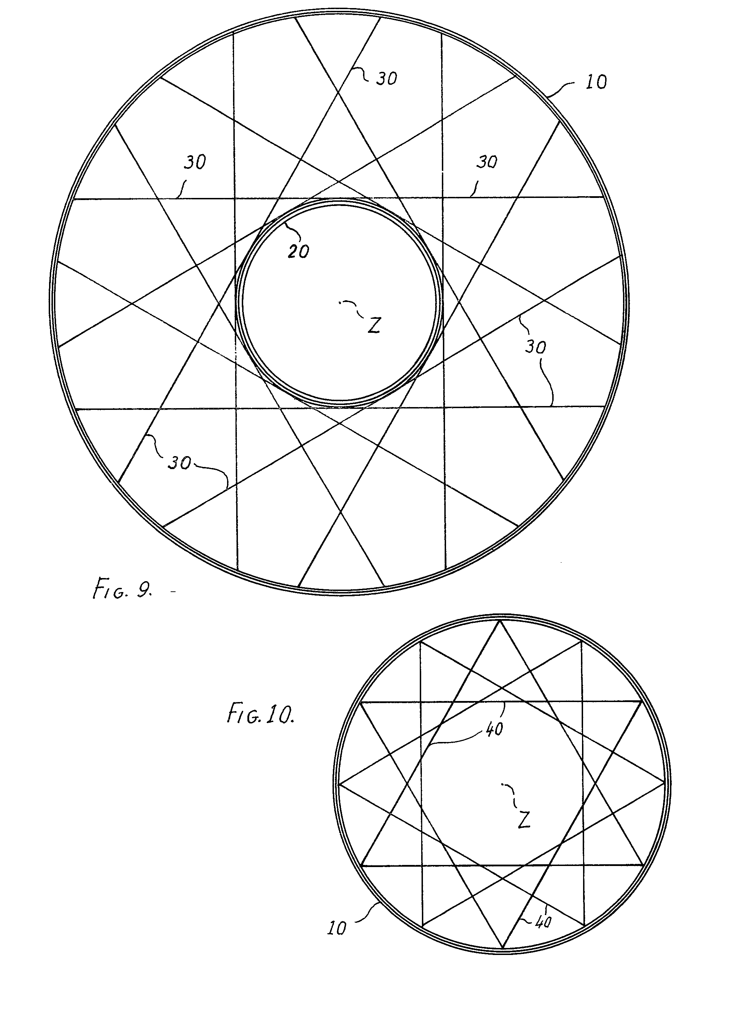

Le procédé de mise en place des lames portantes par déroulement de matière en bande permet non seulement une mise en place impeccable et rapide, mais permet également de réaliser aisément des rails de roulement de n'importe quelle forme de section transversale. Quelques exemples typiques de sections sont illustrés aux figures 5 à 8. La gorge repérée par la lettre G sur la figure 8, qui peut être aisément formée à l'aide d'une fraise, permet de loger avantageusement un galet à surface de roulement semi-torique.

Revenant pour l'instant à la structure de roulement proprement dite, le maintien de la forme pafaitement circulaire est assuré au moyen de tirants comme illustré aux figures 9 et 10. La forme de réalisation de la figure 9 comporte deux rails de roulement concentriques 10 et 20. Des tirants 30, par exemple des tirants métalliques ou rayons, judicieusement répartis, sont reliés chacun à un point du rail extérieur 10 et à un point du rail intérieur 20. La forme de réalisation de la figure 10, qui convient plus particulièrement pour des structures portantes de diamètre réduit, comporte un rail de roulement 10. Des tirants 40 judicieusement répartis sont reliés chacun à deux points du rail.

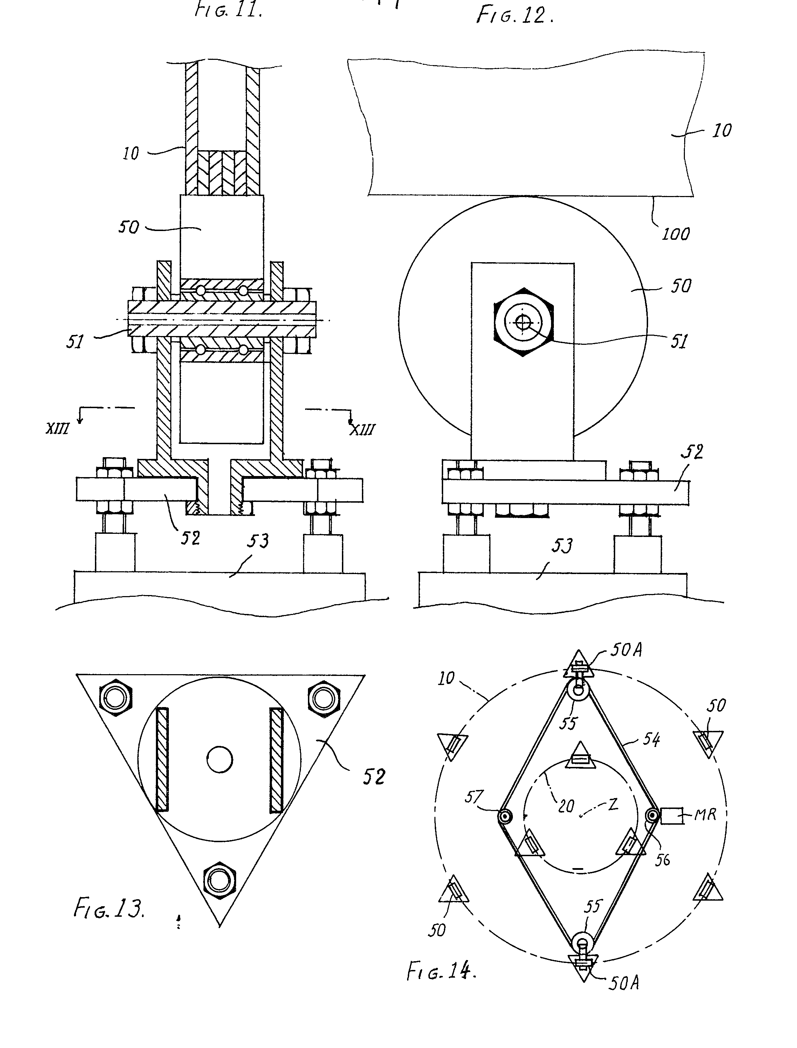

La structure de roulement décrite ci-dessus se trouve avantageusement fixée, suivant l'invention, sous l'ensemble orientable et repose sur des galets fixés au sol comme montré schématiquement aux figures 11 à 13. La figure 11 est une vue suivant l'axe d'un galet d'appui, la figure 12 est une vue en élévation au droit d'un galet d'appui et la figure 13 est une vue suivant la ligne XIII-XIII de la figure 11, montrant la monture d'un galet appui. La référence numérique 10 désigne un rail de roulement fixé sous un ensemble orientable (non montré) et la référence 50 désigne un galet. Le galet 50 est monté sur un axe 51 fixé par l'embase d'attache 52 elle-même fixée sur un socle de fondation 53. On voit que le rail 10 repose sur les galets tels que 50. Les axes 51 étant adéquatement ajustés en niveau, le chemin de roulement 100, impeccablement circulaire et uniforme, peut se déplacer régulièrement et uniformément en douceur par rapports aux galets d'appui 50, entraînant l'ensemble orientable en rotation uniforme autour de son axe de rotation vertical.

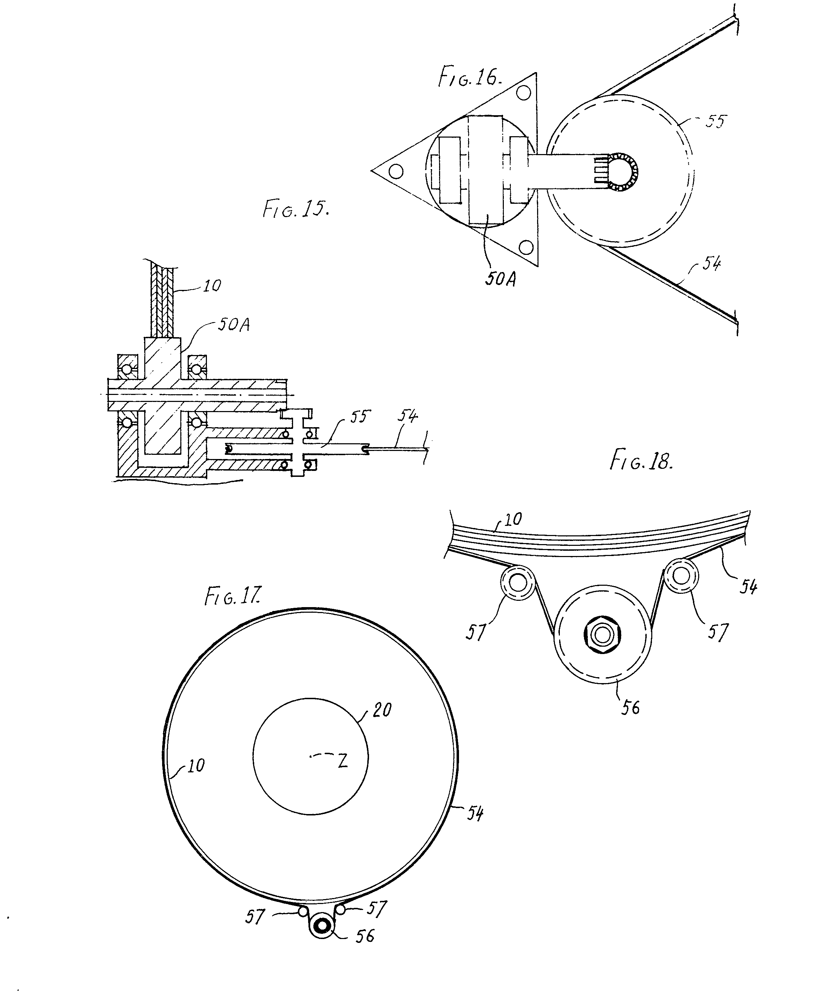

Le déplacement relatif de la structure de roulement telle que 10 par rapport aux galets est avantageusement réalisée par un dispositif d'entraînement tel qu'illustré aux figures 14 à 19. Un premier mode de réalisation est représenté aux figures 14 à 16. La vue en plan de la figure 14 montre schématiquement l'axe d'un chemin de roulement extérieur 10 et l'axe d'un chemin de roulement intérieur 20. Un certain nombre de galets d'appui 50 sont schématisés le long des chemins de roulement. Suivant l'invention, deux galets d'appui au moins servent de galets d'entraînement couplés par câble à un dispositif moto-réducteur MR. Sur la figure 14 les galets d'entraînement sont désignés par 50A et le câble de couplage est désigné par 54. Chacun des galets 50A est accouplé avec une poulie 55 sur laquelle passe le câble 54 comme le montrent plus en détail les figures 15 et 16 qui sont respectivement une vue en élévation suivant l'axe d'un galet et une vue en plan. La poulie motrice 56 attaquée par le moto-réducteur MR, entraîne le câble 54 qui à son tour entraîne les galets 50A en rotation autour de leur axe par l'intermédiaire des poulies 55, ce qui produit le déplacement relatif des galets et de la structure de roulement. Lorsque celle-ci est solidaire de l'ensemble orientable et repose sur les galets comme illustré par exemple à la figure 12, les galets 50A déplacent les rails de roulement 10 et 20 qui entraînent l'ensemble orientable. La poulie 57 sert de tendeur.

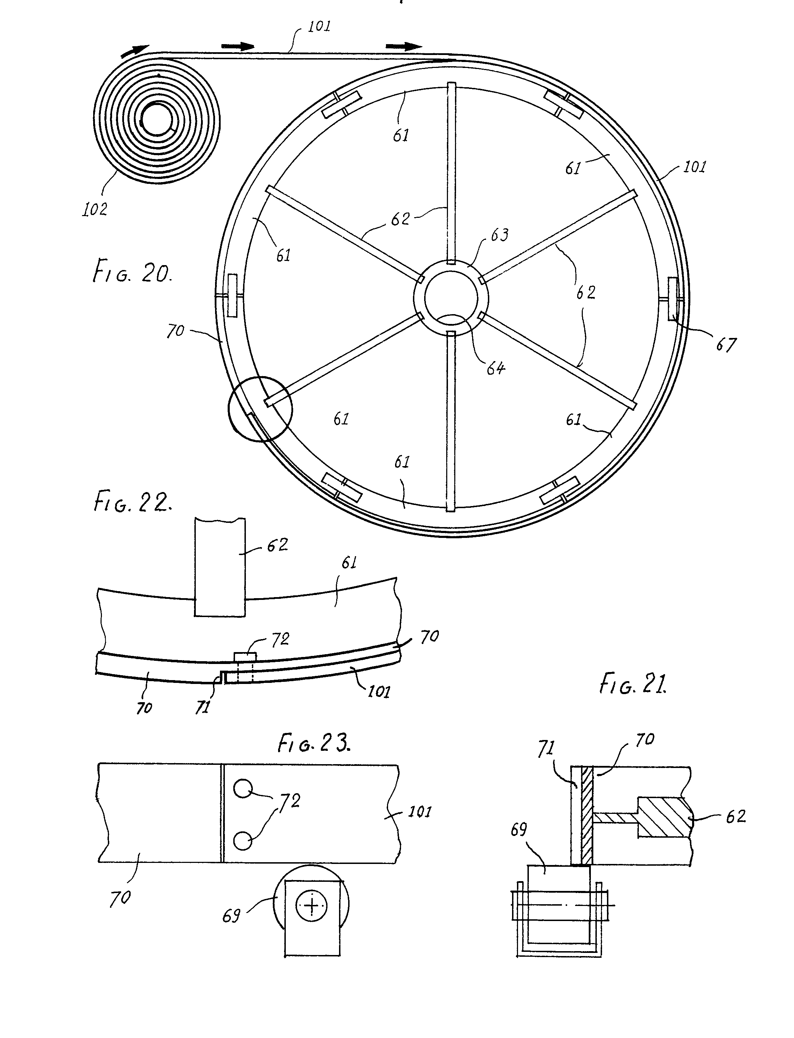

Les figures 17 à 19 illustrent une variante de réalisation avantageuse. Dans ce mode de réalisation le rail de roulement 10 sert lui-même de poulie d'entraînement. Le câble 54 se trouve alors enroulé autour d'une poulie motrice 56 et passe autour du rail 10. Les poulies 57 servent de tendeurs. La figure 19 montre un exemple d'exécution. Le câble 54 court dans une gorge 58 formée sur le pourtour du rail de roulement 10. Cette gorge peut être aisément réalisée au moyen de lames tout comme le rail 10 et en même temps que celui-ci.

Pour la mise en oeuvre du procédé de réalisation de la structure portante décrite dans ce qui précède, l'invention propose également un outil pratique et efficace qui se trouve illustré schématiquement aux figures 20 à 25. Se référant en particulier à la figure 20, on voit que l'outil selon l'invention consiste en un gabarit 60 constitué de plusieurs segments 61 reliés par des bras 62 à une couronne centrale 63 montée à rotation autour d'un axe 64. La figure 21 montre un exemple de profil général du gabarit. Le bandage extérieur 70 est destiné à recevoir l'enroulement de la ou des bandes devant constituer les lames formant le rail de roulement. Dans l'exemple illustré, la surface périphérique du bandage 70 est conçue pour recevoir l'enroulement d'une bande mais il est bien entendu qu'elle pourrait avoir un profil axial propre à recevoir deux ou plusieurs bandes au cours de l'enroulement d'une même spire ou du même anneau (voir figures 1 à 3 par exemple). C'est ainsi que le profil axial de la surface extérieure du bandage 70 est différent pour réaliser chacun des exemples de section illustrés aux figures 5 à 8. Les segments 61 sont fixés entre eux par des attaches détachables 67, 68 avec le bandage 70 reposant sur des galets 69. La surface du bandage 70 présente un ressaut 71 (mieux visible à la figure 22) destiné à loger le début de la bande 100 à enrouler. Cet about début de bande est fixé par des rivets 72, par exemple, sur le bandage 70 contre le ressaut 71. L'about début de bande étant fixé, il suffit très simplement de faire glisser le bandage 70 sur les galets d'appui 69 par rotation du gabarit 60 autour de son axe central 64, la bande 101 s'enroulant alors normalement pour former le nombre d'anneaux voulu. Une fraise (non montrée)peut être placée à la sortie de la bobine débitrice 102 pour profiler un bord de la bande selon le profil de la section transversale souhaitée.

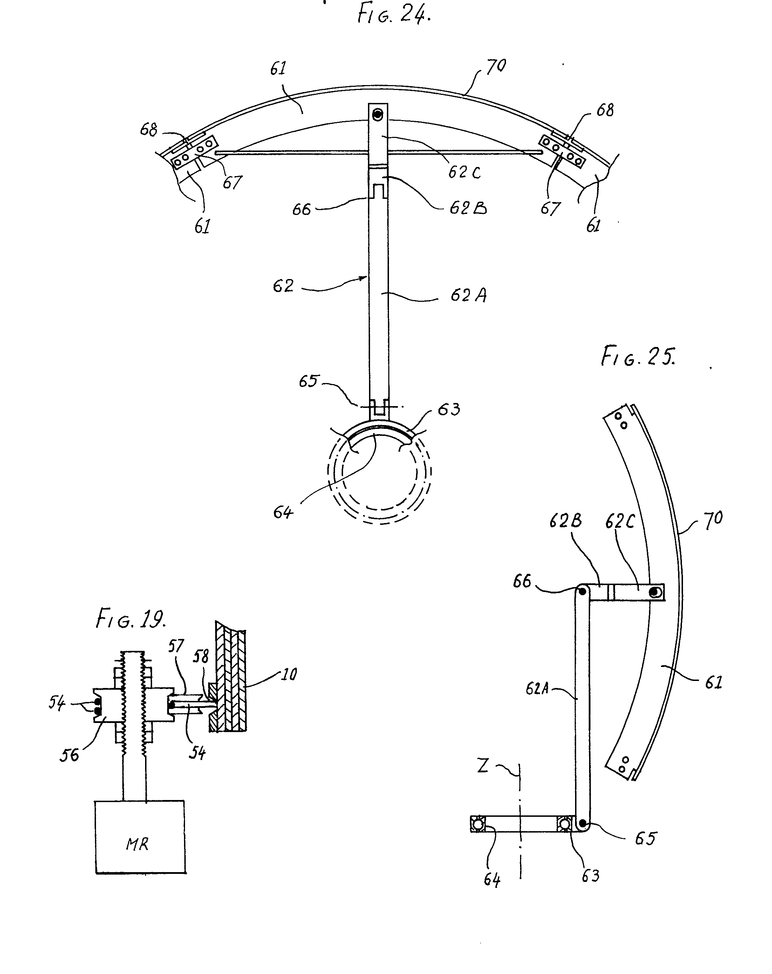

Pour faciliter le transport du gabarit, les bras 62 sont avantageusement articulés en 65 sur la couronne 63 en sorte de pouvoir pivoter dans un plan axial. Comme montré aux figures 24 et 25, chaque bras 62 est avantageusement constitué de tronçons 62A, 62B, 62C articulés1'un sur l'autre de manière à amener les segments 61 près de la couronne centrale 63 pour faciliter le transport du gabarit. Le tronçon 62B pivote autour du pivot 66 dans un plan radial et le tronçon 62C est monté à l'extrémité du tronçon 62B de manière à pouvoir tourner axialement par rapport à celui-ci, ce qui permet d'amener le segment 61 correspondant dans un plan radial comme montré à la figure 25.

REVENDICATIONS

1. Structure portante pour ensemble orientable par rotation autour d'un axe vertical, ladite structure comprenant au moins un rail de roulement et plusieurs galets en contact avec le rail de roulement, caractérisée en ce que le rail de roulement (10) consiste en plusieurs anneaux pratiquement concentriques, chaque anneau comprenant au moins une lame (11) disposée de chant et enroulée suivant le périmètre dudit anneau, les abouts de la lame (A, B) étant répartis angulairement le long du périmètre du rail de roulement de telle manière qu'un rayon quelconque du cercle formé par le rail de roulement ne rencontre jamais qu'un seul about.

2. Structure selon la revendication 1, caractérisée en ce que chaque anneau comprend plusieurs lames (11, 21,...) s'étendant sur au moins un segment du périmètre dudit anneau, les abouts des lames (A, B) étant répartis angulairement le long du périmètre du rail de roulement de telle manière qu'un rayon quelconque du cercle formé par ledit rail ne rencontre jamais qu'un seul desdits abouts.

3. Structure selon l'une quelconque des revendications 1 et 2, caractérisée en ce qu'elle comprend des tirants (40) reliés chacun à deux points du rail de roulement.

4. Structure selon l'une quelconque des revendications 1 et 2 comprenant plusieurs rails de roulement (10, 20), caractérisée en ce qu'elle comprend des tirants (30) reliés chacun à un point d'un rail et à un point d'un autre rail.

5. Structure selon l'une quelconque des revendications 1 à 4, caractérisée en ce que les galets (50) sont fixés au sol, le rail de roulement (10), support de l'ensemble orientable, reposant sur lesdits galets en sorte de pouvoir glisser sur ceux-ci lorsque l'ensemble orientable est entraîné en rotation.

6. Structure portante pour ensemble orientable par rotation autour d'un axe vertical, ladite structure comprenant au moins un rail de roulement et plusieurs galets en contact avec le rail de roulement, caractérisée en ce qu'elle comprend un dispositif d'entraînement constitué d'un câble (54) tendu autour d'au moins deux poulies (55) couplées chacune à un des galets d'appui (50), et d'un dispositif (MR) monté pour déplacer ledit câble autour des poulies de manière à faire entraîner les galets d'appui en rotation.

7. Structure selon la revendication 6, caractérisée en ce qu'une desdites poulies est constituée par un rail de roulement (10) lui-même de la structure portante.

8. Procédé de réalisation d'un rail de roulement pour ensemble orientable selon la revendication 1, caractérisé en ce que les anneaux constituant le rail sont formés par enroulement d'au moins une bande de matière (101) placée de chant.

9. Gabarit pour mettre en oeuvre le procédé selon la revendication 8, caractérisé en ce qu'il comprend plusieurs segments courbes (61) reliés entre eux de façon détachable, ces segments étant également reliés par des bras (62) à une couronne centrale (63) montée à rotation autour d'un axe, lesdits bras étant articulés sur la couronne centrale en sorte de pouvoir pivoter dans un plan axial, les segments portant un bandage (70) dont la surface périphérique présente un profil axial propre à recevoir au moins une bande de matière à enrouler.

10. Dispositif selon la revendication 9, caractérisé en ce que chaque bras comprend plusieurs tronçons (62A, 62B,..) articulés l'un sur l'autre de manière à amener les segments (61) du gabarit près de la couronne centrale (63) pendant le transport du dispositif.

FIG. 1.

FIG. 2.

FIG. 3.

Fig. 4.

Fig. 5.

Fig. 6.

11

51

41  31  21

Fig. 7.

Fig. 8.

G

FIG. 9.

FIG. 10.

FIG. 11.

FIG. 12.

10

50

51

XIII ← → XIII

52 53

10

100

50

51

52

53

FIG. 13.

52

10

50A

55

54

57

20 Z

MR

56

50

55

50A

FIG. 14.

5/7

0023896

Fig.16.

Fig.15.

Fig.18.

Fig.17.

0023896

Fig. 20.

102

101

61

61

61

62

63

64

61

61

61

61

61

70

67

Fig. 22.

62

61

72

70

70

71

101

Fig. 23.

72

101

70

69

Fig. 21.

71

70

69

62

0023896

Fig. 24.

Fig. 25.

Fig. 19.

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| | DE – A – 1 930 076 (W. MROTZECK) <br> * revendications 8 à 10; fig. 1, 3 * <br><br> -- | 1 | E 04 B  1/346 |
| | DE – A – 2 309 194 (J. SCHÄTZ) <br> * revendications 3, 4; fig. 2, 3 * <br><br> -- | 6 | |
| | US – A – 2 563 531 (C.A. KIRKMAN et al.) <br> * fig. 4 à 6, 10 * <br><br> -- | 6 | **DOMAINES TECHNIQUES RECHERCHES (Int. Cl.³)** |
| A | FR – A – 2 114 401 (M. MAITRE) <br> * fig. 2 * <br><br> -- | | E 01 B 26/00 <br> E 04 B  1/346 <br> E 04 H  6/00 |
| A | DE – A – 1 814 424 (G. SCHACHSCHNEIDER) <br> * fig. 2 * <br><br> -- | | |
| A | FR – A – 2 030 825 (MACTON MACHINERY CO.) <br> * fig. 1, 3, 6 * <br><br> ---- | | |

| X | Le présent rapport de recherche a été établi pour toutes les revendications | | |
|---|---|---|---|
| **Lieu de la recherche** <br> Berlin | **Date d'achèvement de la recherche** <br> 20-10-1980 | **Examinateur** <br> v. WITTKEN | |

OEB Form 1503.1  06.78